# EUROPEAN PATENT APPLICATION

(11) **EP 4 748 908 A1**
(43) Date of publication of application: **27.05.2026**
(21) Application number: 25218552.5
(22) Date of filing: 26.11.2025
(51) Int. Cl.: C10J 3/10, C10J 3/74, B01J 19/00, H05B 6/64

(54) **GASIFICATION REACTOR FOR THE GASIFICATION OF FOSSIL OR NON-FOSSIL FUELS, IN PARTICULAR BIOMASS**

(30) Priority: 26.11.2024 IT 202400026502
(71) Applicant: Endeavour S.r.l., 27040 Portalbera (PV) (IT)
(72) Inventor: BRUNI, Gianluigi, 27040 Pietra de Giorgi (PV) (IT); PERREGRINI, Luca, 27100 PAVIA (PV) (IT)
(74) Representative: Cosenza, Simona

(57) **Abstract**

A gasification reactor (10) for the gasification of fossil and non-fossil fuels, comprising a tubular vessel (11) defining an inner volume which extends along a longitudinal axis (A), the vessel (11) having an inlet opening for the entry of a mass of fuel to be gasified, an outlet opening for the exit of the ashes produced by the gasification of the mass of fuel and an outlet port for the exit of the gas produced by the gasification of the mass of fuel, at least one heater (13) associated with a wall (14) of the vessel (11) and comprising at least one microwave absorber body (15) or microwave transparent body associated with the wall (14) and at least one microwave waveguide (16) having a first end portion (16a) coupled to the microwave absorber body (15) and a second end portion (16b) which is opposite to the first one, extends outside the vessel (11) and is configured to couple to a microwave source (17), wherein the microwave absorber body (15) or microwave transparent body comprises a tubular element (150) which is closed at a first end associated with the wall (14) and which houses inside itself at least the first end portion (16a) of a respective said microwave waveguide (16), the second end of the tubular element (150) extending outside the vessel (11) and being open to allow insertion of a microwave waveguide (16) thereinto, and wherein the tubular element (150) is associated with the wall (14) in such a way that its longitudinal axis (B) lies on a plane transverse to the longitudinal axis (A) of the vessel (11).

## Description

The present invention relates to a gasification reactor for the gasification of fossil or non-fossil fuels, and, among the latter, in particular biomass.

As is known, gasification is a thermochemical process that allows to convert a fuel (i.e., a solid, liquid, or gaseous carbonaceous material), whether fossil or non-fossil (such as biomass), into gas and chemical products, which in turn can be used to produce energy or be converted into other value-added chemical products. Typically, gasification allows to obtain a synthesis gas (known as "syngas" or "producer gas") mainly composed of CO, CO₂, CH₄, H₂, and N₂. Such syngas can then be used as a fuel for internal combustion engines or for thermal or thermoelectric power generation plants, or it can be converted into more complex compounds such as, for example, second-generation liquid fuels.

Generally, the gasification process takes place inside a reactor (gasifier) and develops through the steps of drying, pyrolysis, gasification, and (partial) combustion, depending on the nature of the fossil or non-fossil fuel to be converted, the structure of the reactor within which the gasification process takes place, and the gasifying agent used. Indeed, the gasification process requires a reaction medium, that is, a "gasifying agent", which can be a gas (typically consisting of air, oxygen, or subcritical steam, or a mixture of two or more of them), or supercritical water.

Depending on the manner in which the gasifying agent interacts with the fuel to be converted, reactors are generally divided into two main families: moving-bed reactors (sometimes also referred to in the literature as "fixed-bed" reactors) and fluidized-bed reactors. Moving-bed reactors are in turn distinguished into up-draft, down-draft, and cross-draft-type reactors, known to those skilled in the art.

In gasification reactors, it is known that TAR is always and inevitably formed, with TAR meaning a complex mixture of highly aromatic compounds produced from organic material through thermal or partial oxidation processes.

TAR is generally formed in the temperature range between 200°C and 500°C in gaseous form and tends to condense at lower temperatures in cooler areas of the reactor, forming a viscous liquid (for example, formed by naphthalene, pyrene, benzo[a]pyrene, and others) that compromises the functionality of the reactor itself or of the system using the gas produced by the reactor. The literature provides indications of the maximum acceptable concentration of TAR in the gas produced by gasification processes, depending on the intended use of such gas itself. For example, if the produced gas is intended to feed an internal combustion engine, the maximum acceptable TAR concentration is 80-100 mg/Nm³, with lower limits imposed for more critical applications.

The amount of TAR present in the produced gas also depends on the gasification temperature and on the type of gasifier (reactor) used, which influences the flow and residence time of the gas in the higher temperature areas (above 850 °C), where TAR is converted into non-condensable gases.

In any case, known gasification reactors provide a load inlet for the material to be gasified and an outlet port for the produced gas, further having a temperature profile that increases along the direction of movement of the material to be gasified, from the load inlet to the outlet port. The amount of TAR present in the gas is inversely proportional to the internal temperature of the reactor.

At temperatures above 1300 °C, the molecular chains of TAR undergo the so-called thermal cracking phenomenon, resulting in lighter molecules, i.e., with a molecular weight lower than that of the TAR molecules.

The possibility of increasing the internal temperature of the reactor, thereby initiating the thermal cracking of TAR, allows to produce a "clean" gas (or containing low amounts of TAR) without requiring the installation of expensive filtration systems downstream of the reactor itself.

Documents KR101819211B1, CN109054899A, WO2010/089323A2, and CN205443205U describe gasification apparatuses that comprise microwave heating devices. In the apparatus known from KR101819211B1, the reaction chamber is delimited by a cylindrical body made entirely of microwave-absorbing material, around which heating elements and heat storage elements are arranged. The heating elements are formed by a plurality of heating elements containing in turn microwave-absorbing material. In the apparatuses known from WO2010/089323A2 and CN205443205U, the reactor walls instead comprise windows made of microwave-transparent material.

The object of the present invention is to overcome the above-mentioned drawbacks and, in particular, to ideate a reactor for the gasification of fossil or non-fossil fuels capable of producing gas with a lower TAR content than the prior art.

A further object of the present invention is to provide a reactor that allows to process a plurality of fossil and non-fossil fuels.

A further object of the present invention is to provide a reactor that allows precise and flexible control of the temperature of the mass of fuel and that is easy and effective to use and maintain.

These and other objects of the present invention are achieved by making a reactor for the gasification of fossil or non-fossil fuels as set forth in the independent claims.

Further features of the reactor for the gasification of fossil or non-fossil fuels are set forth in the dependent claims.

The features and advantages of a reactor for the gasification of fossil or non-fossil fuels according to the present invention will become more apparent from the following description, provided by way of nonlimiting example, with reference to the attached schematic drawings, in which:
- Figure 1 is a schematic and partially exploded sectional view of a portion of a reactor according to a first possible embodiment of the present invention;
- Figure 2 is a partially exploded view of Figure 1;
- Figure 3 is a schematic sectional view of a portion of a reactor according to a second possible embodiment of the present invention;

- Figure 4 is an axonometric view of the microwave absorber body of the reactor of Figure 3;
- Figure 5 is an axonometric view of the microwave absorber body of Figure 4 provided with load adapters;
- Figure 6 is a schematic sectional and partially exploded view of the heater of the reactor of Figure 3;
- Figure 6A shows, on an enlarged scale, a detail of Figure 6;
- Figure 7 is a schematic axonometric and partially exploded view of the heater of the reactor of Figure 3. With reference to the figures, a reactor for the gasification of fossil or non-fossil fuels, in particular biomass, is shown, overall indicated by reference number 10.

In the attached drawings, reactor 10 is shown only schematically and partially; in particular, the elements of the reactor that are common to known types of reactors are shown and described only to the extent necessary for understanding the present invention, the remainder being known to those skilled in the art.

In the present description and in the attached drawings, reference is particularly made to a moving-bed reactor 10 of the so-called "downdraft" type of the Imbert type (i.e., with a truncated-conical throat or restriction); however, it is specified that the present invention is also applicable to other typologies of reactors, and in particular to "moving-bed" reactors (also referred to in the literature as "fixed-bed" reactors) of the so-called "up-draft" type, "cross draft" type, or still other typologies.

The reactor 10 comprises a tubular vessel 11 defining an inner volume which extends along a longitudinal axis A. The vessel 11 has an inlet opening (not illustrated) for the entry of a mass of fuel to be gasified, an outlet opening (not illustrated) for the exit of the ashes produced by the gasification of the mass of fuel, and an outlet port (not illustrated) for the exit of the gas produced by the gasification of the mass of fuel.

The inlet opening and the outlet opening are defined at axially opposite ends of the vessel 11, and in a "down-draft" reactor, the outlet port of the produced gas coincides with the ash outlet opening. In the use configuration of the reactor 10, the vessel 11 is arranged with its longitudinal axis A in a vertical orientation, and with the inlet opening defined at a higher level than the outlet opening.

Preferably, the vessel 11 is generally cylindrical with a constant section. In a preferred embodiment, the vessel 11 has, at an axial section thereof, a single or double truncated-conical portion 12 (i.e., converging-diverging).

Under operating conditions, the vessel 11 is generally maintained in sealed or airtight conditions with respect to the external environment, in order to prevent the entry of undesired air that would compromise the gasification process therein. As is known, indeed, the gasification process requires a gasifying agent (air, oxygen, water steam, or supercritical water), which, however, must be present in an amount lower than the stoichiometric amount required for the complete combustion of the mass of fuel, generally equal to 10-20% thereof.

The mass of fuel introduced into the vessel 11 forms a reaction bed and flows from the inlet opening to the outlet opening along an advancement direction that, in the specific case, coincides with the longitudinal axis A.

According to the present invention, the reactor 10 comprises at least one heater 13 associated with a wall 14 of the vessel 11, and comprising a microwave absorber body 15 associated with the wall 14 and at least one microwave waveguide 16 having a first end portion 16a through which the microwaves propagate, which faces towards the microwave absorber body 15, and a second end portion 16b, which is opposite to the first one, extends outside the vessel 11, and is configured to be coupled to a microwave source 17 (e.g., a magnetron).

Preferably, the wall 14 is the lateral wall delimiting the inner volume of the vessel 11, within which the mass of fuel undergoes gasification.

Advantageously, the wall 14 is made of refractory material. For example, the wall 14 is made of cement.

The microwave absorber body (15) comprises a heating portion 15a that faces towards the inner volume of the vessel 11 and is intended to directly contact the mass of fuel undergoing gasification. In particular, the heating portion 15a can be shaped to match the profile of the inner lateral surface of the vessel 11 and, for example, can comprise a wall shaped to match the profile of the inner lateral surface of the vessel 11 or of its wall 14. Alternatively, the heating portion 15a can be shaped to project beyond the inner lateral surface of the vessel 11, thereby creating a discontinuity in the wall 14.

The microwave absorber body 15 is made of at least one microwave-absorbing material. Preferably, microwave absorber body 15 is made of a microwave-absorbing material in the frequency region between 100 MHz and 300 GHz. In a preferred embodiment, the microwave absorber body 15 is made of microwave-absorbing material at a frequency of 2.45 GHz.

The microwave absorber body 15 can also be made of a microwave-absorbing material in a frequency region different from (either wider or narrower than) that specified above, depending on the technical solutions adopted.

Advantageously, the microwave absorber body 15 is entirely made of microwave-absorbing material.

Preferably, the microwave-absorbing material is silicon carbide.

Generally, silicon carbide ensures mechanical stability up to temperatures near 1700°C.

Employing microwave absorber bodies 15, advantageously consisting of bodies made of at least one microwave-absorbing material, allows to heat said microwave absorber bodies 15 to temperatures higher than those achievable by employing thermal resistances. This allows the gasification of masses of fuel having poor or no capacity to absorb microwaves and to gasify materials (for example plastics) that tend to solidify and adhere to the walls of the vessel during temperature transients.

The microwave waveguide 16 comprises a hollow tubular conduit with a rectangular, circular, or elliptical section and preferably made of metal.

The first end portion 16a of the microwave waveguide 16 is configured to face towards a portion of microwave absorber body 15, or in any case a surface thereof that faces outwards from the inner volume of the vessel 11.

Preferably, the first end portion 16a of the microwave waveguide 16 is coupled to a respective blind seat 18 formed in the microwave absorber body 15 itself. Blind seat 18 means a seat closed at its bottom 18a, or however of its wall that faces towards the first end portion 16a of the microwave waveguide 16.

Advantageously, the bottom 18a, or the wall of the blind seat 18 facing towards the first end portion 16a of the microwave waveguide 16, is defined at a surface of the heating portion 15a of the microwave absorber body 15, opposite to that facing towards the inner volume of the vessel 11 and intended to directly contact the mass of fuel undergoing gasification.

The microwaves propagating from the first end portion of each microwave waveguide 16 are thus absorbed by the microwave absorber body 15, which in turn heats up. The heat from the microwave absorber body 15 is then transmitted to the wall 14 and/or to the mass of fuel present in the inner volume of the vessel 11. The heating of the mass of fuel present in the inner volume of the vessel 11 is therefore an indirect microwave heating.

Preferably, between the first end portion 16a of the microwave waveguide 16 and the microwave absorber body 15, a corresponding load adapter 19 can be interposed. Advantageously, the load adapter 19 is interposed between the first end portion 16a of the microwave waveguide 16 and the corresponding blind seat 18, or better its bottom 18a.

In a preferred embodiment, the load adapter 19 is formed by a pyramidal body, whose base rests on the bottom 18a of the corresponding blind seat 18, and the remaining part of which is inserted into the first end portion 16a of the corresponding microwave waveguide 16. The possible load adapters 19 can have shapes other than that shown.

The second end portion 16b of each microwave waveguide 16 extends outside the vessel 11 and is shaped to be coupled to a microwave source 17. This allows the microwave sources 17 to be arranged at a suitable distance from the reactor 10, thus preserving its integrity and ensuring its proper employment.

Preferably, the reactor 10 comprises a plurality of heaters 13, either identical or different from each other, and distributed at the same height or at different heights.

Preferably, each microwave waveguide 16 is coupled to a respective microwave source 17.

Advantageously, the reactor 10 comprises a gas injector (not shown) arranged to inject a gas (in particular, air) into the microwave waveguide 16, and a detector of pressure of said gas in the volume delimited by such microwave waveguide 16 and/or between it and the microwave absorber body 15. By monitoring the pressure inside the volume delimited by such microwave waveguide 16 and/or between it and the microwave absorber body 15, it is possible to detect the formation of possible fracture events in the microwave absorber body 15.

The reactor 10 can further comprise a casing 20, advantageously made of metal, which encloses inside itself the vessel 11.

Advantageously, between the casing 20 and the vessel 11, a gap 21 is defined.

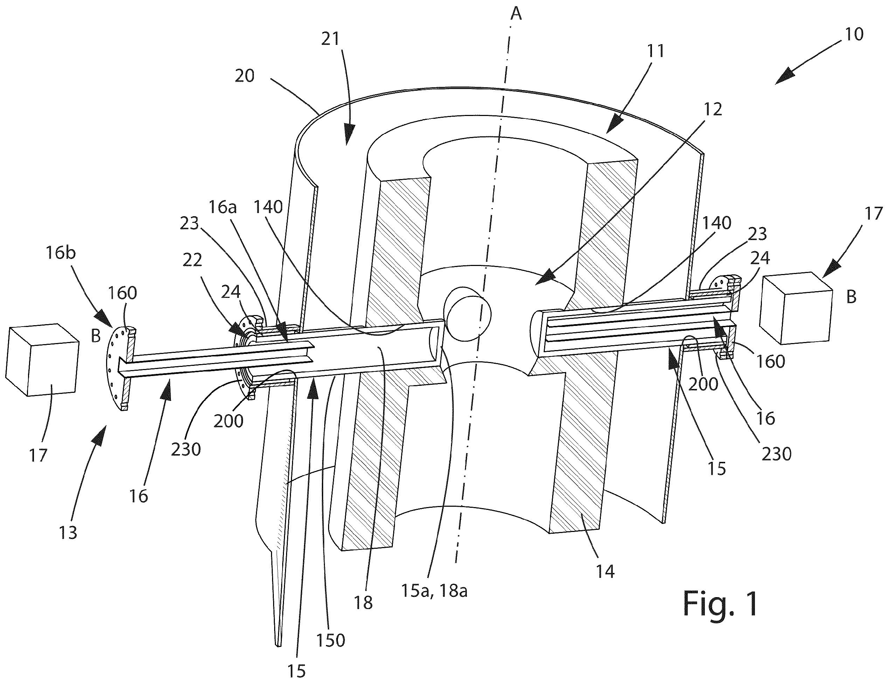

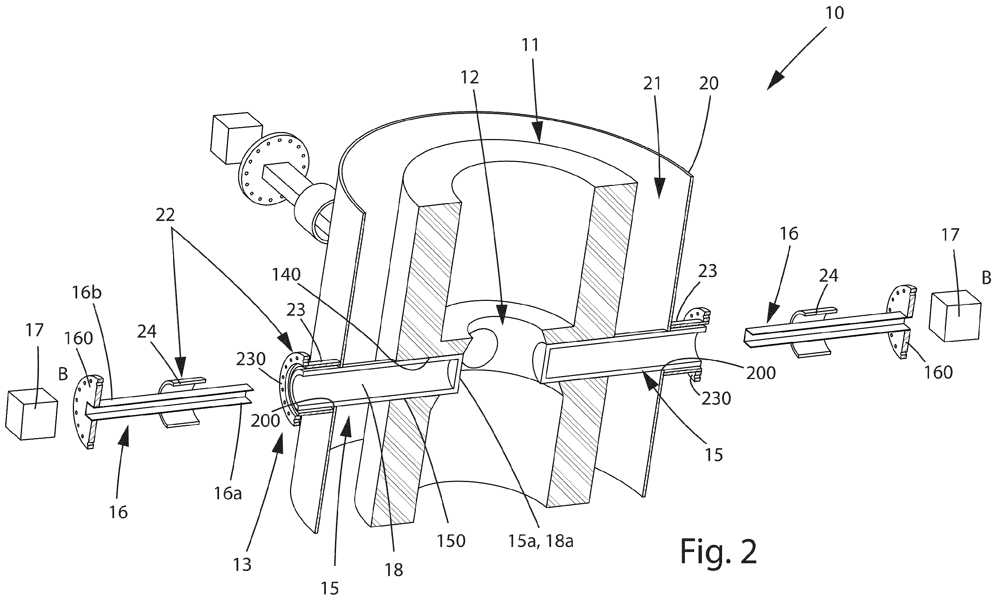

In a first possible embodiment shown in Figures 1 and 2, the heater 13 comprises one or more microwave absorber bodies 15, each of which comprises a tubular element 150 which is closed at one end and which houses inside itself at least the first end portion 16a of a respective microwave waveguide 16.

Preferably, the tubular element 150 houses the entire microwave waveguide 16 therein, except for its terminal portion that is configured to be coupled to the microwave generator 17 and/or to be fixed to the reactor 10.

The second end of the tubular element 150 extends outside the vessel 11 and is open to allow insertion of the microwave waveguide 16 thereinto. Advantageously, a sealing 22 is provided to seal the second end of the tubular element 150, which extends outside the vessel 11, from the external environment and from the second end portion of the corresponding microwave waveguide 16. Such sealing 22 can comprise, for example, an enclosure structure and a dedicated resin/mortar. In this way, it is ensured that the gas produced inside the vessel 11 cannot flow back into the microwave waveguide 16, which could cause problems to the microwave source 17 (magnetron).

The sealing 22 seals the second end of the tubular element 150 from the surrounding environment, including both the inner volume of the vessel 11 and the external environment of the vessel 11.

The inner volume of the tubular element 150 forms a corresponding blind seat 18, whose bottom 18a consists of the wall that closes the first end of the tubular element 150 itself. The first closed end of the tubular element 150 forms the heating portion 15a of the corresponding microwave absorber body 15, which faces towards the inner volume of the vessel 11 and is intended to directly contact the mass of fuel undergoing gasification. Preferably, the first closed end of the tubular element 150, which forms the heating portion 15a of the corresponding microwave absorber body 15, extends at least partially into the inner volume of the vessel 11. In particular, the first closed end of the tubular element 150 can be shaped to match the profile of the inner lateral surface of the vessel 11 and, for example, can comprise a wall shaped to match the profile of the inner lateral surface of the vessel 11 or of its wall 14. Alternatively, the first closed end of the tubular element 150 can be shaped to project beyond the inner lateral surface of the vessel 11, creating a discontinuity in the wall 14. The first closed end of the tubular element 150 can consist of a flat wall, either orthogonal or inclined with respect to the longitudinal axis of the tubular element 150.

Each tubular element 150 is associated with the wall 14 by passing through its thickness. That is, each tubular element 150 is inserted into a corresponding through-opening formed in the wall 14.

Each tubular element 150 is associated with the wall 14 in such a way that its longitudinal axis B lies on a plane transverse, advantageously but not necessarily orthogonal, to the longitudinal axis A of the vessel 11.

The first end and the second end of each tubular element 150 are thus its axially opposite ends.

Advantageously, each tubular element 150 is associated with the wall 14 in such a way that its longitudinal axis B extends along a radial direction of the corresponding cross-section of the vessel 11.

Preferably, as shown in Figures 1 and 2, the heater 13 comprises a plurality of microwave absorber bodies 15, each of which comprises a tubular element 150 with a corresponding microwave waveguide 16 as described above.

In the exemplified embodiment, the microwave absorber bodies 15 are identical to each other and are arranged in a radial pattern at the same height. The microwave absorber bodies 15 can also differ from each other, as well as their number, distribution, and height can differ from what is exemplified.

It is further specified that tubular element 150 forming each microwave absorber body 15 can have a cross-section of any shape, for example, square or circular, and it is not necessarily constant along its entire longitudinal extension.

In greater detail, as visible from Figures 1 and 2, each tubular element 150 is inserted into a corresponding through-opening 140 formed in the wall 14, with its first closed end facing towards the inner volume delimited by the wall 14. Each tubular element 150 extends through the gap 21 and protrudes with its open second end outside the casing 20.

Therefore, the casing 20 has, for each tubular element 150, a corresponding through-opening 200, coaxial with a respective through-opening 140 formed in the wall 14. The sealing 22 comprises an enclosure structure 23 that accommodates the second end of the respective tubular element 150. A seal 24 is interposed between the enclosure structure 23 and the outer lateral surface of the second end of the tubular element 150.

The enclosure structure 23 is fixed to the outer lateral wall of the casing 20 at a respective through-opening 200, configured to be traversed by a respective tubular element 150. The enclosure structure 23 can consist of a sleeve, in particular a flanged sleeve.

The enclosure structure 23 then comprises an attaching flange 230 for a corresponding attaching flange 160 formed at the second end portion 16b of the respective microwave waveguide 16.

The seal 24 can consists of a gasket or by a resin/mortar, for example silicone-based.

The assembly is carried out by first inserting the tubular element 150 into the through-opening 200 and into the through-opening 140, in such a way that its first closed end faces towards the inside of the vessel 11, and its second end extends outside the vessel 11 and the casing 20 to be accommodated in the respective enclosure structure 23.

Between the tubular element 150 and the enclosure structure 23, the seal 24 is then inserted or injected. Finally, the microwave waveguide 16 is inserted into the tubular element 150, in which it is accommodated substantially along its entire length, and attaching flanges 230 and 160 are constrained together, for example by removable bolts.

Coupling the attaching flanges 230, 160 completes the sealing 200.

Making each microwave absorber body 15 in the form of a tubular element 150 having a closed first end and an open second end, and configured to contain a respective microwave waveguide 16 therein, allows to arrange the sealing 22 in a position spaced from the wall 14 and, preferably, at a position at room temperature. In such a position, the sealing 22 ensures that gas developing inside the reactor 10 does not enter the microwave waveguide 16. Indeed, gas generated inside the vessel 11 could infiltrate between the tubular element 150 and the wall 14. The structure of the tubular element 150 and the provision of the sealing 22 prevent any such gas infiltration from entering the microwave waveguide 16, which could otherwise cause arcing and malfunctions.

Such structure enables simple assembly and disassembly operations, facilitating maintenance and/or replacement interventions. Each assembly consisting of tubular element 150, microwave waveguide 16 and seal 24 can be easily removed, serviced, or replaced from the outside. Arranging the sealing 22 in a position spaced from wall 14, and thus in a position at lower temperatures than those reached in the proximity of the wall 14, ensures effective and long-lasting sealing action by the seals 24.

At the same time, employing tubular elements 150, each containing a respective microwave waveguide 16, allows the waveguide to be brought into very close proximity (on the order of a few millimetres) to the inside of the reactor, or to the biomass to be heated, thereby maximizing energy density on the biomass.

In an alternative embodiment, each tubular element 150 can be made of microwave-transparent material, rather than microwave-absorbing material. The structure, arrangement, and connection between the various components (tubular element 150, microwave waveguide 16 and sealing 22) and the reactor (wall 14, casing 20 and gap 21) are the same as those described above and illustrated in Figures 1 and 2, whose description is incorporated herein as applicable.

Preferably, the microwave-transparent material is selected, for example, from the group comprising ceramic materials, such as alumina or zirconia.

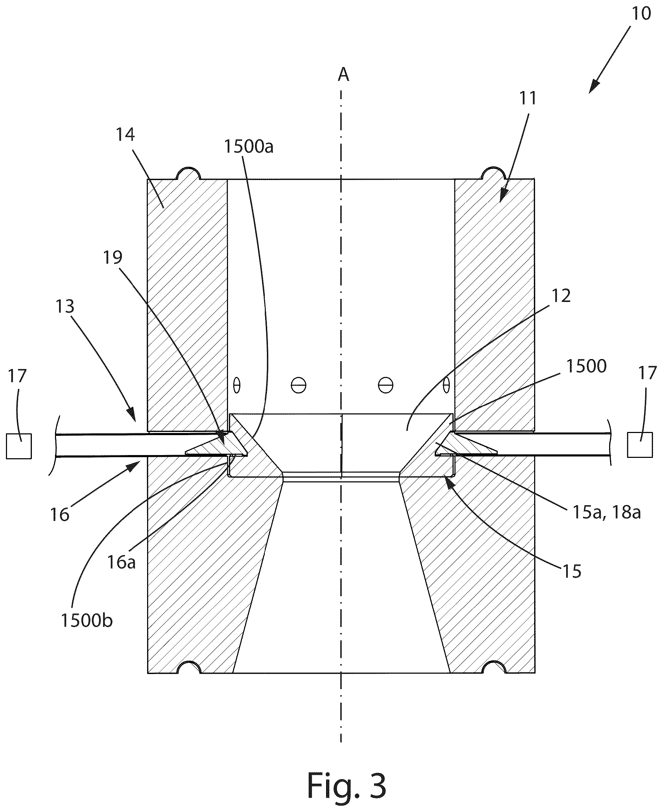

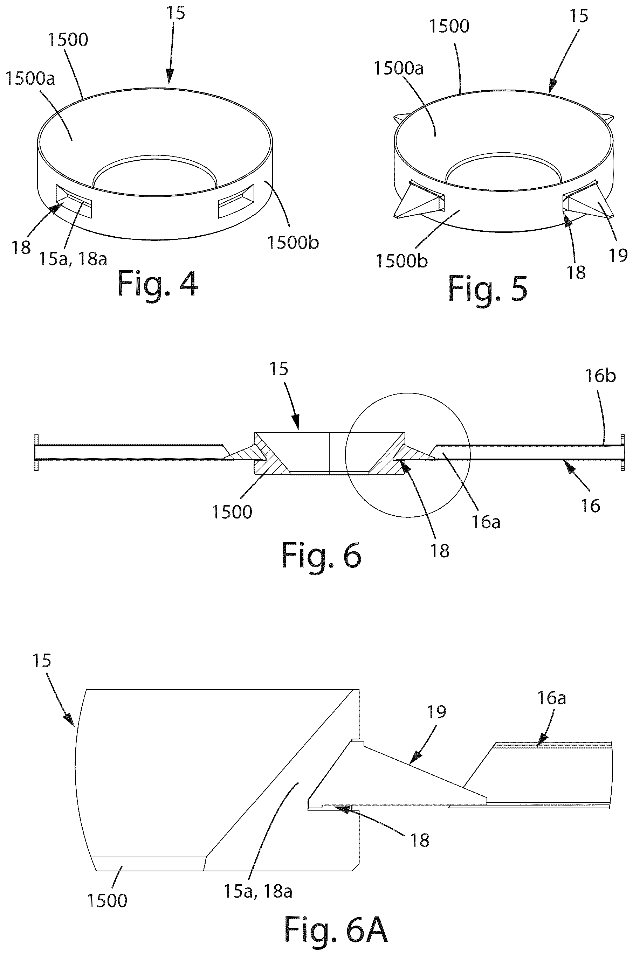

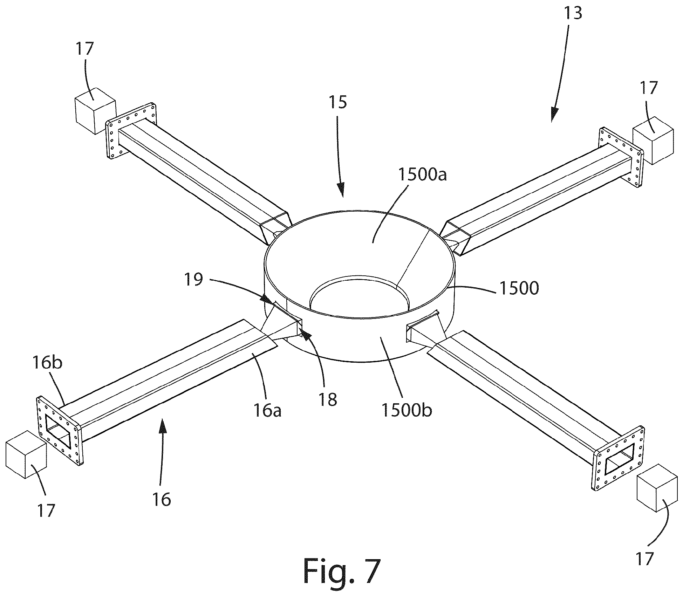

The microwaves propagating from the first end portion of each microwave waveguide 16 are thus transmitted through the transparent material forming the tubular element 150, and subsequently absorbed by the biomass. It is possible to employ, in the same reactor, both tubular elements 150 made of microwave-absorbing material and tubular elements 150 made of microwave-transparent material. In a second possible embodiment, exemplified in Figures 3 to 7, the microwave absorber body 15 comprises an annular element 1500 that is associated with the wall 14, forming an integral part thereof.

The annular element 1500 has an inner lateral surface 1500a and an outer lateral surface 1500b; the former is intended to face towards and/or delimit the inner volume of the vessel 11, while the latter faces outwards with respect to the inner volume of the vessel 11.

That is, the inner lateral surface 1500a of the annular element 1500 delimits a corresponding axial section of the inner volume of the vessel 11.

The inner lateral surface 1500a of the annular element 1500 can be cylindrical, single or double truncated-conical (converging-diverging), or have another shape.

The annular element 1500 delimits a corresponding axial section of the inner volume of the vessel 11.

Preferably, the annular element 1500 defines truncated-conical portion 12.

The inner lateral surface 1500a of the annular element 1500 forms the heating portion 15a of the microwave absorber body 15, which faces towards the inner volume of the vessel 11 and is intended to directly contact the mass of fuel to be gasified.

The first end portion 16a of one or more microwave waveguides 16 faces towards the outer lateral surface 1500b of the annular element 1500.

In a preferred embodiment, one or more blind seats 18 are formed within the thickness of the annular element 1500, in each of which the first end portion 16a of a corresponding microwave waveguide 16 is coupled.

Each blind seat 18 consists of a closed-bottom cavity open at the outer lateral surface 1500b of the annular element 1500, so as to be coupled with the first end portion 16a of the corresponding microwave waveguide 16.

Between each blind seat 18 and the first end portion 16a of the respective microwave waveguide 16, a load adapter 19 can be interposed.

As visible in Figures 3 to 7, a plurality of blind seats 18 are advantageously provided, distributed along the annular extension of the annular element 1500, in each of which the first end portion 16a of a corresponding microwave waveguide 16 is coupled.

The annular element 1500 consists of a solid body, advantageously entirely made of microwave-absorbing material.

The entire annular element 1500, made of microwave absorber material, is heated, and in turn, transfers thermal energy to the mass of fuel to be gasified.

A microwave absorber body 15 consisting of an annular element 1500 can be arranged at any height or position along the longitudinal extension of the vessel 11, as well as more than one of such microwave absorber bodies 15 can be provided along the longitudinal extension of the vessel 11.

Similarly, the same reactor 10 can be provided with microwave absorber bodies 15 shaped both as tubular elements 150 and as annular elements 1500.

In an alternative embodiment, the annular element 1500 can be made of a microwave-transparent material instead of a microwave-absorbing material. The structure of the annular element 1500 being equal to that described above and shown in the attached figures.

It is also possible to employ, in the same reactor, both annular elements 1500 made of microwave-absorbing material and annular elements 1500 made of microwave-transparent material.

In this case as well, the microwave-transparent material can consist, for example, of ceramic materials such as aluminium or zirconia.

The heater 13 of the present invention is independent of the type of the reactor 10, whether of the "downdraft", "updraft", "crossdraft", fluidized bed, or fixed bed type, and independent of the internal geometry of the vessel 11, although, by way of example, the attached figures show a "downdraft" reactor 10 of the Imbert type, that is, with a section provided with a conical throat or restriction.

The heater 13 being the object the present invention allows to heat, by means of a microwave source 17, of a section of the vessel 11 (i.e., the microwave absorber body 15) consisting of a material that absorbs the electromagnetic field in the microwave region. Such section of the vessel 11 (i.e., the microwave absorber body 15) is interposed between the microwave source 17 and the mass of fuel to be gasified. The energy of the microwaves is absorbed by the microwave absorber body 15, which is brought to temperatures sufficient to trigger the reaction and subsequently ensure the thermal cracking of TARs.

The heater 13 according to the present invention can be adopted alone or associated with other heating techniques such as, for example, thermal resistances, plasma, etc.

The heater 13 allows to increase the internal temperature of the reactor 10, thereby enabling "thermal cracking" of tars, and allowing the production of "clean" gas (i.e., containing low amounts of TAR) without needing to install costly filtering systems downstream of the reactor 10 itself.

The heater 13 according to the present invention allows to make an indirect heating of the mass of fuel to be gasified by means of one or more microwave absorber bodies 15 having at least the following advantages:
- the microwave absorber bodies, or the microwave-absorbing material of which they are made can be rapidly heated to temperatures above 1300°C;
- the microwave sources can be effectively isolated from gases and dust present in the reactor;
- the microwave sources can be mounted externally to the reactor, at a distance from the vessel such as to allow to effectively cool the microwave waveguides and to dissipate the heat conducted from inside the reactor;
- the microwave-absorbing material of which the microwave absorber bodies are made ensures consistent load matching as seen by the microwave source and eliminates reflections, thus improving heating efficiency;
- it allows to process masses of fuel that do not absorb microwaves;
- it allows to maintain a temperature of the mass of fuel to be gasified even when having a very low residual moisture; microwaves, indeed, are not absorbed by the mass of fuel to be gasified, but by the microwave absorber body/bodies, which is/are associated with a wall of the vessel and configured and arranged so as to have at least a portion thereof (heating portion) in contact with the mass of fuel present in the inner volume of the vessel;
- if, when cooling, material deposits were to form on the internal surface of the vessel, for example, plastics that solidify as the temperature decreases, heating the vessel, or preferably the microwave absorber body/bodies coupled to a wall thereof through a microwave source, allows to disintegrate such deposits and "self-clean" any buildup.

It is also noted that the wall 14, to which the microwave absorber body 15 is associated, is preferably made of a refractory material rather than a metallic material.

The possibility of adopting a plurality of microwave sources allows greater modulation of heating, thus offering greater control flexibility and greater reliability of the reactor, in the event of failure/depletion of one of them.

Employing load adapters adapted to minimize reflections due to material discontinuities between the first end portion of a microwave waveguide and the microwave absorber body allows the gasification of different masses of fuel without changing the general setup of the reactor.

The indirect microwave heating technique can be employed on its own or associated with other heating techniques such as, for example, microwave heating, thermal resistance heating, plasma heating, etc.

From the description made, the features of the reactor for the gasification of fossil or non-fossil fuels being the object to the present invention are evident, as are the related advantages.

The reactor according to the present invention allows to heat the inner volume of the vessel to temperatures sufficient to trigger the thermal cracking of TAR.

It is finally clear that the reactor for the gasification of fossil or non-fossil fuels thus conceived is susceptible to numerous modifications and variants, all falling within the invention; furthermore, all details are replaceable by technically equivalent elements. In practice, the materials used, as well as the dimensions, can be any depending on the technical requirements.

## Claims

1. Gasification reactor (10) for the gasification of fossil and non-fossil fuels, comprising:
- a tubular vessel (11) defining an inner volume which extends along a longitudinal axis (A), said vessel (11) having an inlet opening for the entry of a mass of fuel to be gasified, an outlet opening for the exit of the ash produced by the gasification of said mass of fuel, and an outlet port for the exit of the gas produced by the gasification of said mass of fuel,
- at least one heater (13) associated with a wall (14) of said vessel (11) and comprising at least one microwave absorber body (15) associated with said wall (14) and at least one microwave waveguide (16) having a first end portion (16a) coupled to said microwave absorber body (15) and a second end portion (16b) which is opposite to the first one, protrudes outside said vessel (11) and is configured to couple to a microwave source (17), wherein said microwave absorber body (15) comprises a tubular element (150) which is closed at a first end associated with said wall (14) and which houses inside itself at least said first end portion (16a) of a respective said microwave waveguide (16), the second end of said tubular element (150) extending outside said vessel (11) and being open to allow insertion of said microwave waveguide (16) into said tubular element (150), and wherein said tubular element (150) is associated with said wall (14) in such a way that its own longitudinal axis (B) lies on a plane transverse to said longitudinal axis (A) of said vessel (11).

2. Gasification reactor (10) for the gasification of fossil and non-fossil fuels, comprising:
- a tubular vessel (11) defining an inner volume which extends along a longitudinal axis (A), said vessel (11) having an inlet opening for the entry of a mass of fuel to be gasified, an outlet opening for the exit of the ashes produced by the gasification of said mass of fuel, and an outlet port for the exit of the gas produced by the gasification of said mass of fuel,
- at least one heater (13) associated with a wall (14) of said vessel (11) and comprising at least one microwave transparent body (15) associated with said wall (14) and at least one microwave waveguide (16) having a first end portion (16a) coupled to said microwave transparent body (15) and a second end portion (16b) which is opposite to the first, extends outside said vessel (11) and is configured to couple to a microwave source (17), wherein said microwave transparent body (15) comprises a tubular element (150) which is closed at a first end associated with said wall (14) and which houses inside itself at least said first end portion (16a) of a respective said microwave waveguide (16), the second end of said tubular element (150) extending outside said vessel (11) and being open to allow insertion of said microwave waveguide (16) into said tubular element (150), and wherein said tubular element (150) is associated with said wall (14) in such a way that its longitudinal axis (B) lies on a plane transverse to said longitudinal axis (A) of said vessel (11).

3. Gasification reactor (10) according to claim 1, wherein said microwave absorber body (15) comprises a heating portion (15a) facing towards the inner volume of the vessel (11), said first closed end of said tubular element (150) forming said heating portion (15a).

4. Gasification reactor (10) according to any one of the preceding claims, comprising a plurality of said heaters (13) and/or wherein said heater (13) comprises a plurality of said microwave absorber bodies (15) or of said microwave transparent bodies, each of which is associated with a respective microwave waveguide (16).

5. Gasification reactor (10) according to claim 1 or to one of claims 3 and 4 when dependent on claim 1, wherein said microwave absorber body (15) is made of a microwave-absorbing material selected from the group comprising ceramic materials, such as silicon carbide.

6. Gasification reactor (10) according to one or more of the preceding claims, wherein said microwave absorber body or microwave transparent body (15) comprises at least one blind seat (18) in which said first end portion (16a) of a respective said microwave waveguide (16) is coupled, wherein the inner volume of said tubular element (150) forms a respective said blind seat (18) whose bottom (18a) is formed by the wall that closes said first end of said tubular element (150) itself.

7. Gasification reactor (10) according to one or more of the preceding claims, **characterized in that** each said tubular element (150) is inserted into a corresponding through-opening (140) formed in said wall (14).

8. Gasification reactor (10) according to one or more of the preceding claims, comprising, for each said tubular element (150), a respective sealing (22) configured and arranged to seal said second end of said tubular element (150) from the external environment and from the second end portion (16b) of the corresponding microwave waveguide (16).

9. Gasification reactor (10) according to claim 8, wherein said sealing (22) comprises an enclosure structure (23) of said second end of said tubular element (150) and a seal (24) interposed between said enclosure structure (23) and said second end of said tubular element (150).

10. Gasification reactor (10) according to claim 9, wherein said enclosure structure (23) comprises an attaching flange (230) for a corresponding attaching flange (160) formed at the second end (16b) of the respective microwave waveguide (16).

11. Gasification reactor (10) according to one or more of the preceding claims, comprising a casing (20) enclosing said vessel (11), a gap (21) being defined between said casing (20) and said vessel (11), wherein the second end of each of said tubular elements (150) extends outside said casing (20).

12. Gasification reactor (10) according to claim 11 and claim 9 or 10, wherein said enclosure structure (23) is fixed to the outer lateral wall of said casing (20).

13. Gasification reactor (10) according to one or more of the preceding claims comprising a gas injector arranged to inject gas into said at least one microwave waveguide (16) and a detector of pressure of said gas in the volume delimited by said microwave waveguide (16) and/or between said microwave waveguide (16) and said microwave absorber or microwave transparent body (15).
